# EUROPEAN PATENT APPLICATION

(11) **EP 2 685 316 A2**
(43) Date of publication of application: **15.01.2014**
(21) Application number: 13171958.5
(22) Date of filing: 14.06.2013
(51) Int. Cl.: G03G 15/00, H04N 1/00, G06K 15/02

(54) **Data generating apparatus, data generating method, and recording medium**

(30) Priority: 10.07.2012 JP 2012154661
(71) Applicant: Fujifilm Corporation, Minato-ku Tokyo 106-8620 (JP)
(72) Inventor: Kuranoshita, Masashi, Tokyo 107-0052 (JP)
(74) Representative: Klunker . Schmitt-Nilson . Hirsch

(57) **Abstract**

A data generating apparatus (20) and a data generating method generate imposition data for imposing a plurality of pages on a print medium (36). A recording medium (68) stores therein a program which enables a computer to function as an apparatus for generating such imposition data. After imposition data have been converted from grid data into fold data, trials are performed to fold a hypothetical print medium (100) based on the converted fold data, so that pages, which are superimposed by folding the hypothetical print medium (100), have sequential page numbers and are oriented in one direction. Results of the trials are acquired as fold information for folding an actual print medium (36).

## Description

### BACKGROUND OF THE INVENTION

### Field of the Invention:

The present invention relates to a data generating apparatus and a data generating method for generating imposition data for imposing a plurality of pages on print mediums, as well as to a recording medium storing therein a program for enabling a computer to perform function as a means for generating such imposition data.

### Description of the Related Art:

According to a bookbinding process including a printing process, images representing a plurality of pages of a book are printed on large-size print mediums, which are then folded over themselves into signatures by a folding machine. The signatures are cut into folios, which are stitched into a book. Prior to performing the printing process, an imposing process is carried out to generate imposition data for allocating or imposing a plurality of pages on the print mediums.

Japanese Patent No. 2898525 and Japanese Laid-Open Patent Publication No. 2011-017938A (hereinafter referred to as "JP2011-017938A") disclose conventional imposing processes.

More specifically, Japanese Patent No. 2898525 discloses a process in which, even if plural imposition data are mixed together for producing a single book that contains pages of different sizes, the imposition data for the book are managed in a unified way, so that the imposition data can automatically be imposed on designated signatures and folios.

JP2011-017938A discloses a process in which, in the case that a plurality of pages are imposed on a single print medium, a plurality of fold line candidates are displayed on a display screen. Each time that one of the displayed fold line candidates is designated, a next fold line candidate is displayed on the display screen.

### SUMMARY OF THE INVENTION

In terms of the data format thereof, imposition data for imposing a plurality of pages on print mediums are classified into grid data and fold data. Grid data comprise data that define positions of a plurality of pages imposed on print mediums, page numbers of the pages, and orientations of the pages. Fold data comprise data that define the positions of fold lines about which print mediums are folded into signatures, directions (folding directions) in which print mediums are folded about the fold lines, and a folding sequence.

Heretofore, since pre-press (imposition, etc.), press (printing), and post-press (bookbinding) processes have not been interlinked, it has been customary to produce signatures by repeating a process of printing an image based on grid data on a print medium, followed by folding the print medium into two sheets and rotating the sheet. Therefore, such a process has been carried out manually.

In recent years, printing apparatus have been developed to the point where JDF (Job Definition Format) data are exchanged between the printing apparatus to interlink pre-press, press, and post-press processes for automated and systematized workflows. Using JDF data, a signature can easily be produced by printing an image based on fold data on a print medium, and then folding the print medium based on the fold data with a folding machine.

JDF-linked systems are required to meet potential needs for printing images on print mediums to produce signatures therefrom, based on grid data that have been generated on conventional JDF-unlinked systems. If an imposing process is carried out on a hypothetical print medium displayed on a display screen, the user finds it easier to generate grid data by allocating positions of a plurality of pages, page numbers, and page orientations, rather than generating fold data by selecting the positions of fold lines, folding directions, and a folding sequence. In order for a JDF-linked system to be able to supply a print medium to a folding machine to produce a signature, it is necessary to convert imposition data from grid data into fold data.

It is an object of the present invention to provide a data generating apparatus, a data generating method, and a recording medium, which make it possible to produce a signature easily from a print medium by converting imposition data from grid data into fold data.

The present invention is concerned with a data generating apparatus and a data generating method, which generate imposition data for imposing a plurality of pages on a print medium. The present invention also is concerned with a recording medium storing therein a program that enables a computer to function as a means for generating such imposition data.

According to the present invention, there is provided a data generating apparatus having a fold data converter, a folding trial conductor, and a fold information acquirer. According to the present invention, there also is provided a data generating method having a first step, a second step, and a third step. According to the present invention, there further is provided a recording medium storing therein a program that enables a computer to perform functions of converting grid data into fold data, performing folding trials, and acquiring fold information.

More specifically, the fold data converter, the first step, and the means for converting grid data into fold data convert fold data defining positions of pages, page numbers of the pages, and orientations of the pages, as imposition data, into fold data defining positions of fold lines about which the print medium is folded into a signature, folding directions, and a folding sequence.

The folding trial conductor, the second step, and the means for performing folding trials attempt to fold a hypothetical print medium, which simulates the print medium, based on the fold data, so that pages superposed by folding the print medium have sequential page numbers and are oriented in one direction.

The fold information acquirer, the third step, and the means for acquiring fold information acquire a result of folding trial events performed to successfully fold the hypothetical print medium into a signature, as fold information representing the positions of fold lines about which the print medium is folded into a signature, folding directions, and a folding sequence.

According to the present invention, imposition data can automatically be converted from grid data into fold data. Therefore, the user can perform various processes including an imposing process, a bookbinding process, etc., without realizing different types of imposition data, i.e., grid data and fold data. Since imposition data can automatically be converted from grid data into fold data, such data are made compatible with each other.

If the folding trial conductor attempts to fold the hypothetical print medium using converted fold data, and has successfully folded the hypothetical print medium into a signature, the fold information acquirer acquires the trial result as fold information of the fold data. Therefore, actual print mediums can efficiently be folded into signatures according to the acquired fold information. In other words, in a case where the fold data are supplied to a folding machine, the folding machine is made capable of folding the print mediums automatically.

Conversion of imposition data from grid data into fold data makes printing and bookbinding processes including a job folding process more efficient. Even if grid data are generated on conventional JDF-unlinked systems, the grid data can be acquired and converted into fold data in order to produce desired signatures from the print mediums.

According to the present invention, the following functions (1) through (5) may be performed.
(1) The folding trial conductor determines that the signature cannot be produced if the pages superposed by folding the print medium do not have sequential page numbers or are not oriented in one direction in a case where the folding trial conductor attempts to fold the hypothetical print medium. As a consequence, it is possible to prevent print mediums from being wasted due to a failure of the folding process performed by a folding machine.
(2) The hypothetical print medium includes the fold lines and can be folded a plurality of times about the fold lines into the signature. In addition, the folding trial conductor identifies positions of fold lines and folding directions for maximizing a total number of superposed pages having sequential page numbers each time that the hypothetical print medium is folded. Consequently, print mediums can reliably and efficiently be turned into signatures based on identified fold lines and folding directions.
(3) Each time that the hypothetical print medium is folded, the folding trial conductor identifies positions of fold lines and folding directions for maximizing the total number of superposed pages by attempting to fold the hypothetical print medium about all of the fold lines that are available, or stops trying to fold the hypothetical print medium about remaining ones of the fold lines at the time the positions of fold lines and folding directions for maximizing the total number of superposed pages having sequential page numbers are identified.

If trials are performed to fold the hypothetical print medium about all of the fold lines that are available, then it is possible to reliably identify the positions of the fold lines, together with folding directions for maximizing the total number of superposed pages having sequential page numbers. If trials for folding the hypothetical print medium about the remaining fold lines are canceled at the time that the positions of the fold lines and the folding directions are identified for maximizing the total number of superposed pages having sequential page numbers, then the time required to perform the imposing process can be shortened.
(4) The hypothetical print medium includes the fold lines and can be folded a plurality of times about the fold lines into the signature. In addition, the folding trial conductor attempts to fold the hypothetical print medium about all of the fold lines that are available, and thereafter identifies positions of fold lines, folding directions, and a folding sequence for maximizing a total number of superposed pages having sequential page numbers. Consequently, print mediums can reliably and efficiently be turned into signatures based on identified fold lines and folding directions.
(5) The data generating apparatus may further comprise a trial result indicator for externally indicating the result of folding trial events performed on the hypothetical print medium by the folding trial conductor. The trial result indicator allows the user to grasp the result of folding trials performed by the folding trial conductor, i.e., whether a folding trial performed on the hypothetical print medium has been successful or not. If the trial result indicator includes a display unit, then since the result of the folding trials can be displayed as an image, the user can easily grasp the result simply by observing the displayed image.

The above and other objects, features, and advantages of the present invention will become more apparent from the following description when taken in conjunction with the accompanying drawings in which a preferred embodiment of the present invention is shown by way of illustrative example.

### BRIEF DESCRIPTION OF THE DRAWINGS

FIG. 1 is a schematic view of a printing system incorporating a data generating apparatus according to an embodiment of the present invention;
FIG. 2 is a functional block diagram of the data generating apparatus shown in FIG. 1;
FIG. 3 is a flowchart of a process of converting imposition data from grid data into fold data;
FIG. 4 is a diagram showing grid data accumulated in a grid data accumulator shown in FIG. 2;
FIG. 5 is a diagram showing a list of fold line candidates accumulated in a fold line candidate accumulator shown in FIG. 2;
FIG. 6 is a diagram showing a list of fold line solutions accumulated in a fold data accumulator shown in FIG. 2;
FIG. 7A is a view showing the manner in which a plurality of pages are imposed on a front side of a hypothetical print medium;
FIG. 7B is a view showing the manner in which a plurality of pages are imposed on a reverse side of the hypothetical print medium;
FIGS. 8A and 8B are views showing the manner in which the hypothetical print mediums illustrated in FIGS. 7A and 7B are folded;
FIGS. 9A and 9B are views showing the manner in which the folded hypothetical print mediums illustrated in FIGS. 8A and 8B are folded again;
FIGS. 10A and 10B are views showing the manner in which the folded hypothetical print mediums illustrated in FIGS. 9A and 9B are folded into signatures;
FIGS. 11A and 11B are views showing hypothetical print mediums for which it is impossible to convert grid data into fold data;
FIG. 12A is a view showing the manner in which eight pages are imposed respectively on eight print mediums; and
FIG. 12B is a view showing the manner in which the eight pages illustrated in FIG. 12A are imposed on a single print medium.

### DESCRIPTION OF THE PREFERRED EMBODIMENTS

A data generating apparatus according to a preferred embodiment of the present invention in relation to data generating methods and programs, which are carried out by the data generating apparatus, will be described in detail below with reference to the accompanying drawings.

### [Configuration of Data Generating Apparatus]

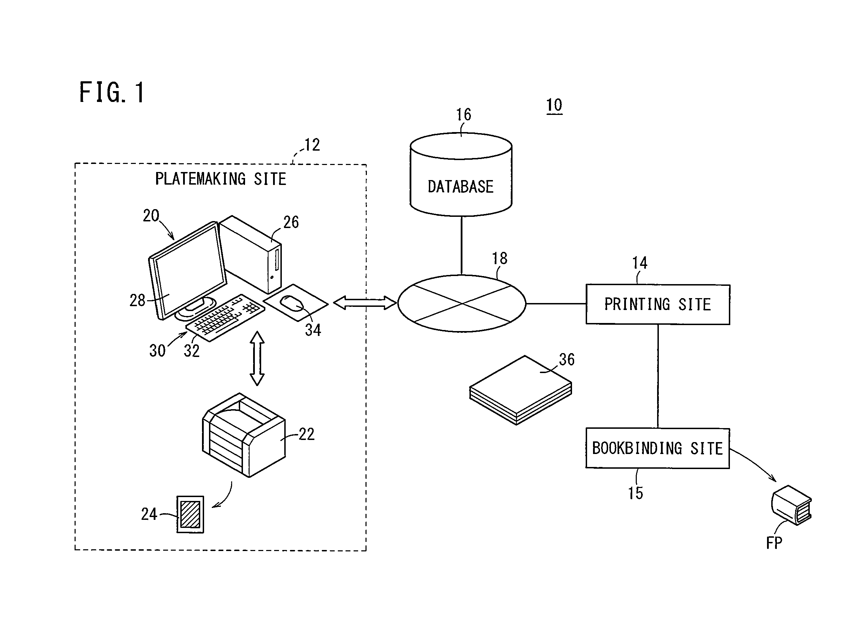

FIG. 1 schematically shows a printing system 10 incorporating a data generating apparatus 20 according to an embodiment of the present invention. As shown in FIG. 1, the printing system 10 basically includes a platemaking site 12, a printing site 14, a bookbinding site 15, a database server 16, and a LAN 18. The platemaking site 12 includes a data generating apparatus 20 and a proof press 22.

The data generating apparatus 20 generates page-specific edit data (page description data) expressed in a page description language (hereinafter referred to as "PDL"), e.g., PDL data in color channels representing four colors (C, M, Y, K) or three colors (R, G, B).

PDL refers to a language for describing image information including format information, position information, and color information (including density information) of characters, graphics, etc., in a "page" that serves as an output unit for printing, displaying, etc. Page description languages include, for example, PDF which stands for "Portable Document Format" and is prescribed according to ISO32000-1:2008, PostScript (registered trademark) of Adobe Systems, and XPS (XML Paper Specification).

The data generating apparatus 20 performs a desired image processing technique such as a preflight process, a color conversion process, or a layout process on page-specific edit data. The data generating apparatus 20 then converts the processed page-specific edit data into raster-format data such as bitmap data or TIFF data, and sends the converted raster-format data as printing data to the proof press 22.

The data generating apparatus 20 includes a main unit 26, a display unit (trial result indicator) 28, and an input assembly 30 including a keyboard 32 and a mouse 34. The mouse 34, which serves as a pointing device, may be replaced with a track pad or a track ball.

The proof press 22 is an output device for printing a proof 24 to be proofread. The proof press 22 may comprise a DDCP (Direct Digital Color Proofer), which is equivalent to an offset press in terms of printing capabilities, an ink jet color proofer, a low-resolution color laser printer (electrophotographic printer), an ink jet printer, or the like.

The database server 16 serves to save, update, and delete various data files required to produce a final print product FP. Such various data files include material data files (content data files) from a production company, not shown, proof data files, platemaking data files, job ticket files (e.g., JDF files), ICC (International Color Consortium) profiles, color sample data files, etc.

The LAN 18 is constructed according to communication standards such as Ethernet (registered trademark) or the like. The platemaking site 12, the printing site 14, and the database server 16 are interconnected by the LAN 18. If the platemaking site 12 and the printing site 14 are geographically spaced remotely from each other, then printing plate data can be exchanged through the LAN 18 between the platemaking site 12 and the printing site 14.

The printing site 14 has an image processor for performing a desired image processing technique on the printing plate data, a plate setter for producing printing plates, and an offset press for printing desired images on various mediums in order to produce prints, i.e., a plurality of jobs 36. The platesetter and the offset press may be replaced with a digital press, which is capable of producing prints directly from printing plate data.

The bookbinding site 15 includes various devices for performing production processes including a surface treatment process, a sheet folding process, a collating process, a binding process, a cutting process, a casemaking process, etc., on a plurality of jobs 36 supplied from the printing site 14. In a case where such production processes are successively performed on the jobs 36, the final print product FP, e.g., the illustrated casebound book, is produced.

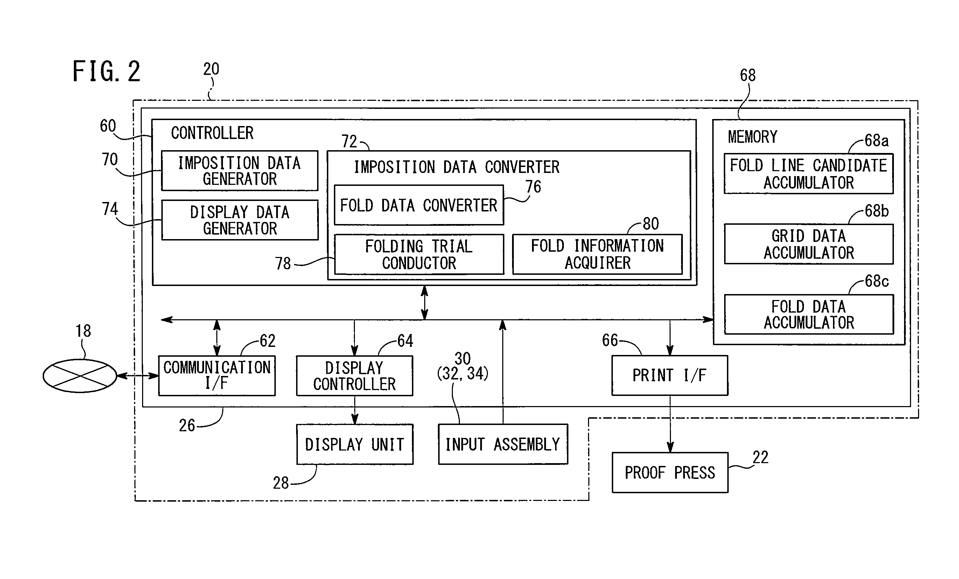

FIG. 2 illustrates in functional block form the data generating apparatus 20 shown in FIG. 1. As shown in FIG. 2, the main unit 26 includes a controller 60, a communication I/F 62, a display controller 64, a print I/F 66, and a memory 68 (recording medium).

The communication I/F 62 is an interface for sending electric signals to and receiving electric signals from various external apparatus. For example, the communication I/F 62 is capable of acquiring various material data provided by the non-illustrated production company. The communication I/F 62 also is capable of acquiring various items of information, such as printing plate data, ICC profiles, etc., which are managed and saved in the database server 16.

The display controller 64 comprises a control circuit for controlling the display unit 28 under the control of the controller 60. More specifically, in a case where the display controller 64 outputs a display control signal to the display unit 28 via a non-illustrated I/F, the display unit 28 is energized and made capable of displaying various images.

The print I/F 66 is an interface for sending electric signals representative of printing data to the proof press 22. The proof press 22 prints a desired proof 24 based on electric signals sent from the print I/F 66.

The memory 68 stores programs and data, which are required for the controller 60 to control various components. The memory 68 includes a fold line candidate accumulator 68a, a grid data accumulator 68b, and a fold data accumulator 68c.

The fold line candidate accumulator 68a accumulates candidates for fold lines (hereinafter referred to as "fold line candidates") about which a job 36 is folded with a plurality of pages imposed thereon to produce a signature in the bookbinding site 15.

Imposition data for imposing a plurality of pages on a job 36 are accumulated respectively in the grid data accumulator 68b and the fold data accumulator 68c. The grid data accumulator 68b and the fold data accumulator 68c accumulate the imposition data in different formats for imposing pages on the same job 36.

The grid data accumulator 68b accumulates grid data for defining positions of a plurality of pages imposed on jobs 36, page numbers of the pages, and orientations of the pages. The fold data accumulator 68c accumulates fold data, which define positions of fold lines about which the jobs 36 are folded into signatures, directions (folding directions) in which the jobs 36 are folded about the fold lines, and a folding sequence.

As described later, since the controller 60 is capable of converting imposition data from grid data into fold data, the grid data and the fold data are made compatible with each other.

The controller 60 comprises a processor such as a CPU (Central Processing Unit) or the like. The controller 60 performs various functions as an imposition data generator 70, an imposition data converter 72, and a display data generator 74, by reading and executing programs stored in the memory 68.

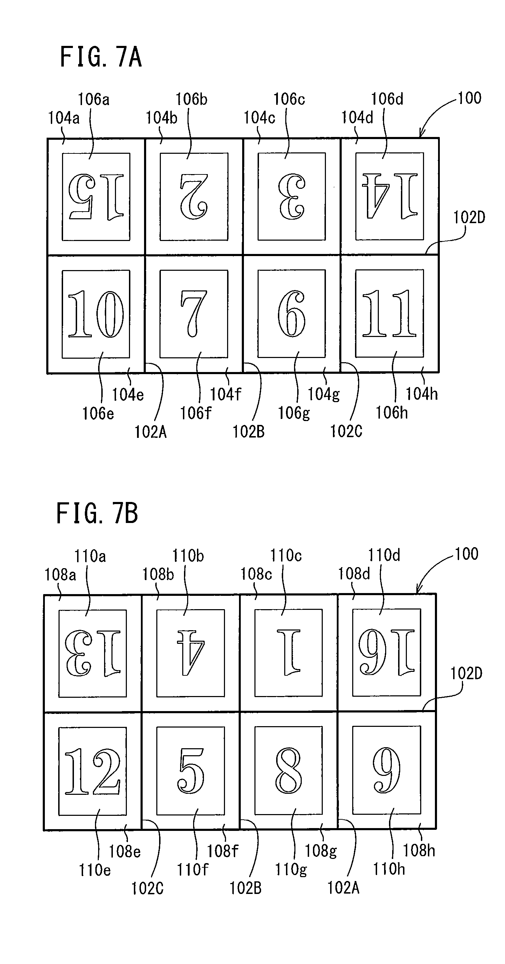

The imposition data generator 70 generates page-specific edit data from material data representative of characters, graphics, patterns, photos, etc., and also generates imposition data, e.g., job tickets, for imposing pages onto sheets of a given size according to a designated binding method and a designated sheet folding method. The display unit 28 displays on a screen thereof a hypothetical print medium 100 (see FIGS. 7A and 7B), which simulates a job 36. In a case where the user operates the input assembly 30 to designate positions of a plurality of pages, page numbers, and page orientations, the imposition data generator 70 generates imposition data (grid data) depending on the information designated by the user. The generated grid data are accumulated in the grid data accumulator 68b.

The data generating apparatus 20 exchanges JDF data with other devices in the printing system 10, thus providing an interlink between the devices in the printing system 10 on the basis of the JDF data. The imposition data generator 70 may also acquire grid data through the LAN 18 or the like from conventional JDF-unlinked systems, and may accumulate the acquired grid data in the grid data accumulator 68b.

The imposition data converter 72 includes a fold data converter 76, a folding trial conductor 78, and a fold information acquirer 80.

The fold data converter 76 reads grid data accumulated in the grid data accumulator 68b, and converts the read grid data into fold data. The fold data are accumulated in the fold line candidate accumulator 68a.

The folding trial conductor 78 reads the fold data that is accumulated in the fold line candidate accumulator 68a, and attempts to fold a hypothetical print medium 100 (see FIGS. 7A and 7B), which simulates a job 36. More specifically, based on the assumption that plural pages are imposed on the hypothetical print medium 100 and fold lines represented by the fold data are formed on the hypothetical print medium 100, the folding trial conductor 78 attempts to fold the hypothetical print medium 100 about the fold lines, thereby specifying positions of optimum fold lines about which the job 36 is folded into a signature, directions (folding directions) for folding the job 36 about the fold lines, and a sequence (folding sequence) according to which the job 36 is folded.

If the folding trial conductor 78 finds that no signature can be produced from the hypothetical print medium 100 by attempting to fold the hypothetical print medium 100 about the fold lines based on the fold data, then the folding trial conductor 78 determines that the grid data on which the fold data are based are erroneous.

If the folding trial conductor 78 is able to produce a signature by attempting to fold the hypothetical print medium 100, then the fold information acquirer 80 acquires the trial result as fold data (fold information) representing positions of optimum fold lines about which the job 36 actually is folded into a signature, the folding directions, and the folding sequence (an optimum solution to the folding trial). The fold information acquirer 80 also accumulates the acquired fold data in the fold data accumulator 68c.

The printing system 10 supplies printing plate data based on the fold data (imposition data, fold information) accumulated in the fold data accumulator 68c from the platemaking site 12, through the LAN 18, and to the printing site 14, thereby making the printing site 14 capable of printing jobs 36, and of producing signatures, based on the fold data.

The display data generator 74 generates various types of image data to be displayed on the display unit 28. More specifically, the display data generator 74 acquires grid data from the imposition data generator 70, and generates images depending on the acquired grid data. The display data generator 74 also acquires various additional data, such as fold data from the fold data converter 76, the folding trial conductor 78, or the fold information acquirer 80, and generates images depending on the acquired data.

The display controller 64 outputs display control signals to the display unit 28 depending on images generated by the display data generator 74, thereby enabling the display unit 28 to display various images depending on grid data or fold data. For example, the display unit 28 can display an image representing a trial result, which is produced in a case where the folding trial conductor 78 attempts to fold a hypothetical print medium 100, i.e., an image indicating that a signature can be produced, or an image indicating that a signature cannot be produced.

The display data generator 74 performs an RIP (Raster Image Processing) process on the acquired grid data or fold data (imposition data), thereby converting the grid data or the fold data into raster-format data (hereinafter referred to as "RIP-processed imposition data"). More specifically, the display data processor 74 places page-specific edit data in given data areas, adds mark information represented by marks such as registration marks or the like to the page-specific edit data, and rasterizes the page-specific edit data together with the added mark information, thereby producing RIP-processed imposition data.

### [Operations of Data Generating Apparatus]

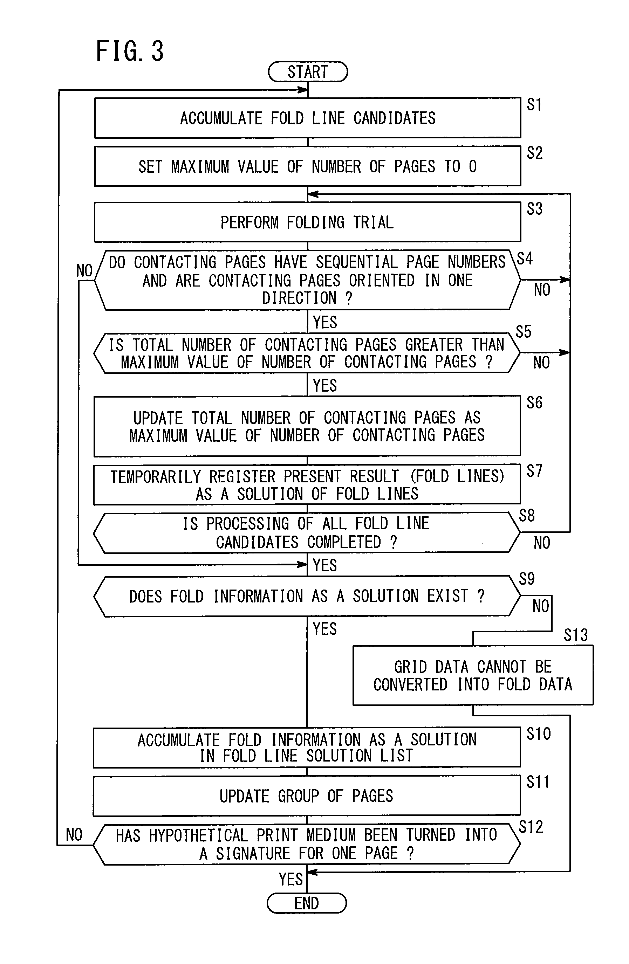

The data generating apparatus 20 according to the present embodiment is configured basically as described above. Operations of the data generating apparatus 20 will be described below with reference to FIGS. 3 through 10B.

As shown in FIGS. 7A and 7B, it is assumed that eight pages are imposed on each of front and reverse sides of a hypothetical print medium 100 depending on a single job 36. In addition, the hypothetical print medium 100 is folded about fold lines 102A through 102G (see FIGS. 7A through 9B).

The data generating apparatus 20 (see FIGS. 1 and 2) operates prior to a printing process, which is carried out on the job 36 at the printing site 14, and a bookbinding process, which is carried out at the bookbinding site 15. Therefore, the data generating apparatus 20 hypothetically attempts to fold the hypothetical print medium 100 about the fold lines 102A through 102G. As shown in FIG. 3, processing details of the steps of a process to convert imposition data from grid data into fold data, which include a folding trial, are displayed as necessary on the display screen of the display unit 28. The process and the data produced thereby, as shown in FIGS. 3 through 10B, basically are carried out and produced by the imposition data converter 72 of the data generating apparatus 20.

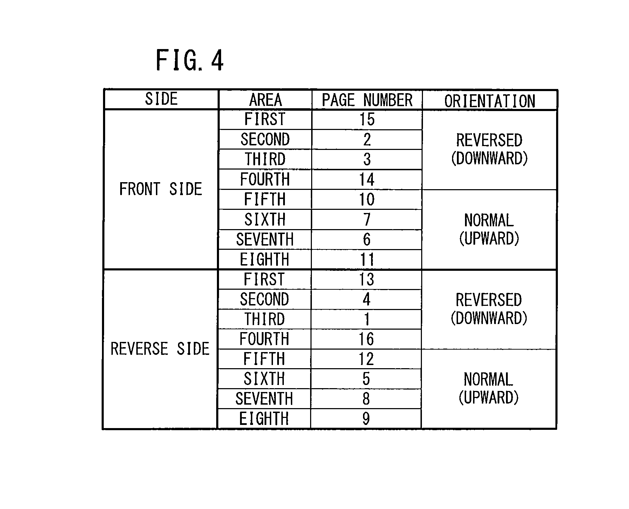

In step S1 (first step) shown in FIG. 3, the fold data converter 76 reads grid data (see FIG. 4), which is accumulated as imposition data in the grid data accumulator 68b.

FIG. 4 shows positions of pages on the front side (FIG. 7A) and the reverse side (FIG. 7B) of the hypothetical print medium 100 shown in FIGS. 7A and 7B, page numbers of the pages, and orientations of the pages.

On the front side of the hypothetical print medium 100 shown in FIG. 7A, boundaries between the pages represent respective fold lines 102A through 102D. The pages shown in FIGS. 4 and 7A are allocated respectively to first through eighth areas 104a through 104h, which represent respective pages.

In FIG. 7A, page numbers are shown in respective first through eighth areas 104a through 104h, and the orientations of the page numbers indicate the orientations of the pages. The term "REVERSED (DOWNWARD)" in FIG. 4 implies that the illustrated page numbers are oriented downwardly, as indicated by pages 15, 2, 3, and 14 in FIG. 7A. The term "NORMAL (UPWARD)" in FIG. 4 implies that the illustrated page numbers are oriented upwardly, as indicated by pages 10, 7, 6, and 11 in FIG. 7B. In FIG. 7A, the first through eighth areas 104a through 104h have respective printing surface areas 106a through 106h.

The reverse side shown in FIG. 7B is a reversal of the front side of the hypothetical print medium 100 shown in FIG. 7A. Boundaries between the pages represent fold lines 102A through 102D, as is the case with the front side shown in FIG. 7A. The pages shown in FIGS. 4 and 7B are allocated respectively to first through eighth areas 108a through 108h, which represent respective pages. In FIG. 7B, the first through eighth areas 108a through 108h have respective printing surface areas 110a through 110h. In FIG. 7B, page numbers also are shown in respective first through eighth areas 108a through 108h, and the orientations of the page numbers indicate the orientations of the pages.

Using the grid data, which have been read, the fold data converter 76 extracts boundaries between the pages, and accumulates the extracted boundaries as fold line candidates in the fold line candidate accumulator 68a.

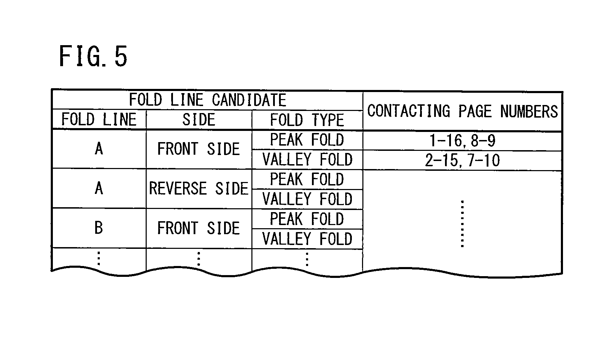

In FIGS. 7A and 7B, since the fold lines 102A through 102D exist, the fold data converter 76 extracts the fold lines 102A through 102D as fold line candidates, and as shown in FIG. 5, accumulates the extracted fold lines 102A through 102D in the fold line candidate accumulator 68a.

The fold data converter 76 also extracts fold types (peak and valley folds) on front and reverse sides about the fold lines 102A through 102D. The fold data converter 76 also extracts page numbers of pages that opposite pages will contact or be superposed on if folded about the fold lines 102A through 102D. As shown in FIG. 5, the fold data converter 76 accumulates the extracted fold types and page numbers in the fold line candidate accumulator 68a.

Therefore, as shown in FIG. 5, the fold line candidate accumulator 68a accumulates therein, as fold line candidates, the fold lines 102A through 102D (indicated as A, B in FIG. 5), the sides (front and reverse sides) that are folded about the fold lines 102A through 102D, and the fold types (peak and valley folds). More specifically, the fold data converter 76 converts the grid data into fold data that defines the positions of the fold lines 102A through 102D about which the job 36 is folded into a signature, directions (folding directions) about which the job 36 is folded about the fold lines 102A through 102D, and a folding sequence. The converted fold data is accumulated in the fold line candidate accumulator 68a.

The peak folds on the front side of the hypothetical print medium 100 shown in FIG. 7A refer to folds which are made by folding the front side about the fold lines 102A through 102D in a direction away from the viewer in FIG. 7A. The valley folds on the front side of the hypothetical print medium 100 shown in FIG. 7A refer to folds which are made by folding the front side about the fold lines 102A through 102D in a direction toward the viewer in FIG. 7A. The peak and valley folds on the reverse side of the hypothetical print medium 100 shown in FIG. 7B are similarly defined, except that "FIG. 7A" and "front" in the above description concerning the peak and valley folds on the front side of the hypothetical print medium 100 are replaced with "FIG. 7B" and "reverse", respectively.

In FIG. 5, fold types about the same fold line 102A on the front or reverse side also are accumulated in the fold line candidate accumulator 68a. However, if the front side is folded about the fold line 102A into a peak fold, the reverse side is complementarily folded about the same fold line 102A into a valley fold, and if the front side is folded about the fold line 102A into a valley fold, the reverse side is complementarily folded about the same fold line 102A into a peak fold. Consequently, the fold line candidate accumulator 68a may accumulate, as fold line candidates, at least information concerning fold lines and fold types on either the front side or the reverse side.

In step S2 shown in FIG. 3, the folding trial conductor 78 sets to 0 (zero) the maximum value (hereinafter referred to as a "maximum contacting page number" or a "maximum value of a number of pages") of a number of pages that will come into contact or be superposed on each other if the hypothetical print medium 100 is folded once about the fold lines 102A through 102D. In a case where the job 36 corresponding to the hypothetical print medium 100 is folded into a signature, the signature is cut into folios, the folios are stitched together, and the pages are arranged in a proper sequence and oriented in the same direction. Therefore, the maximum contacting page number refers to the maximum value of a number of pages, which will be superposed on each other in a case where the job is folded into a signature.

In step S3 (second step), the folding trial conductor 78 reads the list of fold line candidates shown in FIG. 5 from the fold line candidate accumulator 68a, and attempts to fold the hypothetical print medium 100 about one of the fold line candidates (fold lines 102A through 102D) of the list that was read. For example, the folding trial conductor 78 refers to the list of fold line candidates shown in FIG. 5, and folds the hypothetical print medium 100 about the fold line 102A (fold line A in FIG. 5), thereby forming a peak fold on the front side of the hypothetical print medium 100 shown in FIG. 7A.

In step S4, the folding trial conductor 78 determines whether or not the pages, which have been brought into contact with each other as a result of the folding trial in step S3, have sequential page numbers and are oriented in the same direction. As described above, if the job 36 is folded into a signature, the signature is cut into folios, the folios are stitched together, and the pages are arranged in a proper sequence and oriented in the same direction. In step S4, therefore, the folding trial conductor 78 determines whether or not the fold, which was attempted in step S3, is a fold that is capable of producing a signature.

Specific details of a process of attempting to fold the front side of the hypothetical print medium 100 shown in FIG. 7A once will be described below.

In step S3, if the front side of the hypothetical print medium 100 shown in FIG. 7A is folded about the fold line 102A in order to make a peak fold, page 1 and page 16 contact each other on the reverse side, whereas page 8 and page 9 contact each other on the reverse side. However, page 1 and page 16 do not have sequential page numbers. Therefore, the folding trial conductor 78 determines that the fold made in such a manner is incapable of producing a signature (step S4: NO). Therefore, the control returns to step S3, and the folding trial conductor 78 attempts to make another fold.

In step S3, if the front side of the hypothetical print medium 100 shown in FIG. 7A is folded about the fold line 102B in order to make a valley fold, page 2 and page 3 on the front side contact each other, page 6 and page 7 on the front side contact each other, page 10 and page 11 on the front side contact each other, and page 14 and page 15 on the front side contact each other. The pages, which are in contact with each other in each combination, have sequential page numbers and are oriented in the same direction. Therefore, the folding trial conductor 78 determines that the fold, which was made in this manner, is capable of producing a signature (step S4: YES). Control then proceeds to step S5.

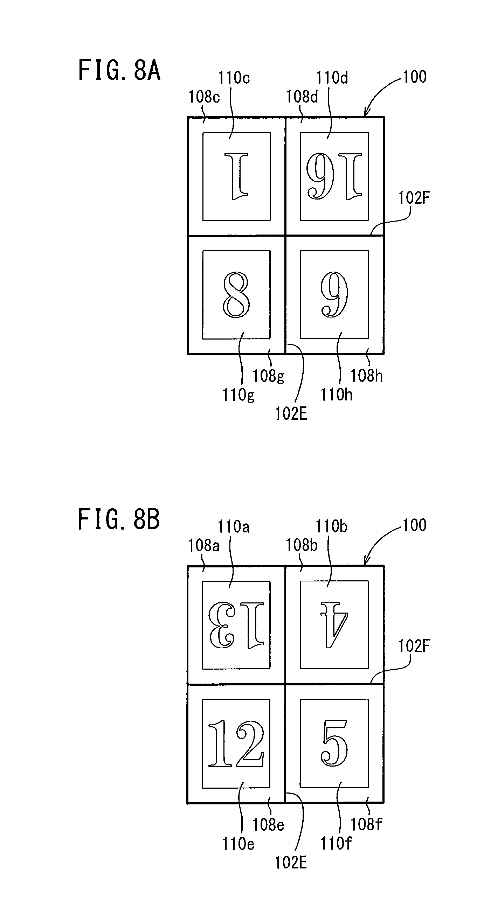

FIGS. 8A and 8B illustrate the hypothetical print medium 100 shown in FIG. 7A, which has been folded about the fold line 102B in order to make a valley fold. FIG. 8A shows the front side, and FIG. 8B shows the reverse side after creation of the valley fold.

In step S5, the folding trial conductor 78 determines whether or not the total number of pages that have been placed in contact with each other in accordance with the fold type, which was judged as affirmative in step S4, is greater than the maximum contacting page number.

Since the maximum contacting page number has been set to 0 (zero) in step S2 and the front side of the hypothetical print medium 100 shown in FIG. 7A has been folded into a valley fold about the fold line 102B in step S3, the total number of contacting pages is eight, i.e., pages 2 and 3, pages 6 and 7, pages 10 and 11, and pages 14 and 15 (step S5: YES). In step S6, the folding trial conductor 78 updates the total number of contacting pages used in step S5 as the maximum contacting page number (maximum contacting page number: 0 → 8). Then, in step S7, the folding trial conductor 78 temporarily registers the result of the present folding trial as a solution to the folding trial in a non-illustrated memory of the folding trial conductor 78.

In step S8, if the folding trial conductor 78 has not completed the trial to fold the hypothetical print medium 100 shown in FIGS. 7A and 7B about all of the fold lines 102A through 102D (step S8: NO), then control returns to step S3, in which the folding trial conductor 78 attempts to fold the hypothetical print medium 100 about any remaining fold lines.

Upon the hypothetical print medium 100 shown in FIGS. 7A and 7B being folded about the fold lines 102C and 102D, a result is obtained in which two contacting pages do not have sequential page numbers, or the contacting pages are oriented in different directions (step S4: NO).

On the other hand, in step S8, if the folding trial conductor 78 has completed the trial to fold the hypothetical print medium 100 shown in FIGS. 7A and 7B about all of the fold lines 102A through 102D (step S8: YES), then in step S9, the fold information acquirer 80 checks the information that has temporarily been registered in the memory of the folding trial conductor 78.

If in steps S3 through S8, the folding trial conductor 78 has attempted to fold the hypothetical print medium 100 about all of the fold lines 102A through 102D, and assuming the result information has been temporarily registered, then the temporarily registered information is considered to be information in relation to fold lines that are capable of producing a signature, i.e., information representing a solution to the folding trial about the fold lines. The temporarily registered information includes information depending on the maximum contacting page number, as well as information depending on a page number that is smaller than the maximum contacting page number.

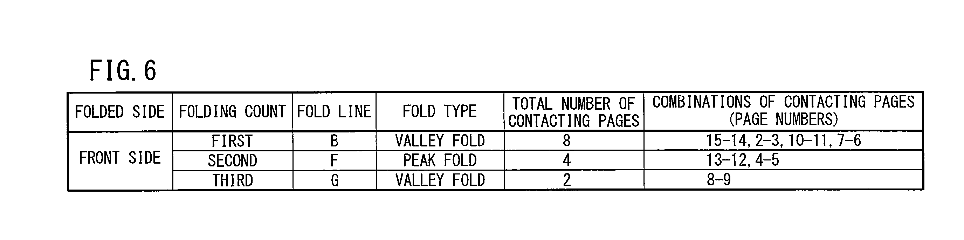

In step S9, from the information temporarily registered in the folding trial conductor 78, the fold information acquirer 80 extracts information depending on the maximum contacting page number as fold line information, which serves as an optimum solution to the folding trial about the fold lines (step S9: YES). In step S10 (third step), as shown in FIG. 6, the fold information acquirer 80 accumulates the extracted fold line information in the fold data accumulator 68c.

As shown in FIG. 6, the fold data accumulator 68c accumulates therein the front side that is folded about the fold lines, the numbers of folding events, the fold lines (i.e., the fold lines 102B, 102F, 102G indicated as B, F, G in FIG. 6), the fold types (peak and valley folds), the maximum contacting page numbers (total numbers of contacting pages), and combinations of contacting pages, as a list of optimum solutions to the folding trial about the fold lines (a list of fold line solutions).

As will be described later, since the above folding trial is carried out repeatedly until the hypothetical print medium 100 is folded into a signature, for each number of folding events, the fold data accumulator 68c accumulates an optimum solution to the folding trial about the fold lines in the form of fold data.

In step S11, based on the list of fold line solutions in the present folding event (first folding event) that are accumulated in the fold data accumulator 68c, the fold information acquirer 80 updates the group of pages represented by the imposition data (fold data) from the group of pages shown in FIGS. 7A and 7B to the group of pages shown in FIGS. 8A and 8B. As a result, the display data generator 74 generates image data depending on the group of pages shown in FIGS. 8A and 8B, and the display controller 64 displays an image represented by the generated image data on the display unit 28.

More specifically, the display unit 28 displays an image showing the hypothetical print medium 100 as updated from the state shown in FIGS. 7A and 7B to the state shown in FIGS. 8A and 8B, thereby indicating to the user that the first folding event was successful. The display unit 28 may display an image that allows the user to easily grasp that the first folding event was successful, i.e., an image that enables the user to understand that the hypothetical print medium 100 has actually been folded. For example, the display unit 28 may display (1) a 3D moving image showing that the hypothetical print medium 100 has been folded from the state shown in FIGS. 7A and 7B to the state shown in FIGS. 8A and 8B, or (2) both an image corresponding to the state shown in FIGS. 7A and 7B and an image corresponding to the state shown in FIGS. 8A and 8B.

In step S12, the fold information acquirer 80 determines whether or not the hypothetical print medium 100 has been turned into a signature (for one page). If the hypothetical print medium 100 has been turned into a signature, control returns to step S1, and the group of pages, which was updated as shown in FIGS. 8A and 8B, is processed again in steps S1 through S11.

Therefore, the imposition data converter 72 executes steps S1 through S12 repeatedly until the hypothetical print medium 100 is turned into a signature (for one page).

After the hypothetical print medium 100 shown in FIGS. 8A and 8B has been processed in steps S1 through S12, two fold lines 102E, 102F are available as fold line candidates. Accordingly, the imposition data converter 72 performs two folding trials.

If the front side of the hypothetical print medium 100 shown in FIG. 8A is folded about the fold line 102F in order to make a peak fold (step S3), pages 4 and 5 are brought into contact with each other, pages 12 and 13 are brought into contact with each other, and the pages are oriented in the same direction (step S4: YES). The total number of contacting pages is four, which is greater than the maximum contacting page number, which was previously set to 0 (zero) in step S2 (step S5: YES). Consequently, the maximum contacting page number is updated to 4 in step S6, and the result of the folding trial is temporarily registered as a solution to the folding trial (step S7).

If the front side of the hypothetical print medium 100 shown in FIG. 8A is folded about the fold line 102F in order to make a valley fold, or is folded about the fold line 102E in order to make a peak fold, or is folded about the fold line 102E in order to make a valley fold (step S3), then the two contacting pages do not have sequential page numbers, or are oriented in different directions (step S4: NO).

Upon the folding trial conductor 78 having completed the attempt at folding the hypothetical print medium 100 shown in FIGS. 8A and 8B about all of the fold lines 102E and 102F (step S8: YES), the folding trial conductor 78 has temporarily registered therein information concerning only the peak fold about the fold line 102F on the front side of the hypothetical print medium 100 shown in FIG. 8A (step S9: YES). Therefore, the fold information acquirer 80 accumulates the temporarily registered information in the fold data accumulator 68c as fold line information, which represents an optimum solution to the second folding event. In this manner, as shown in FIG. 6, the fold line information is accumulated as a second fold line solution.

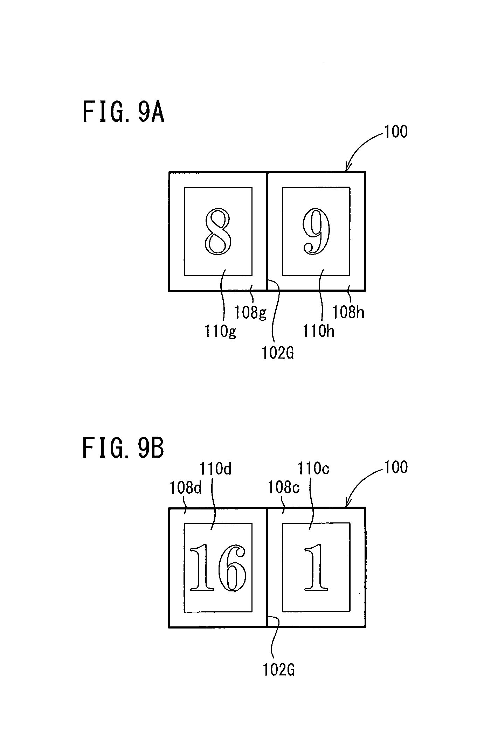

In step S11, based on the second fold line solution, the fold information acquirer 80 updates the group of pages represented by the fold data from the state shown in FIGS. 8A and 8B to the state shown in FIGS. 9A and 9B. As a result, the display data generator 74 generates image data depending on the group of pages shown in FIGS. 9A and 9B, and the display controller 64 displays an image represented by the generated image data on the display unit 28. Similar to the case of the successful first folding event, the display unit 28 displays an image, which shows the hypothetical print medium 100 as updated from the state shown in FIGS. 8A and 8B to the state shown in FIGS. 9A and 9B, thereby indicating to the user that the second folding event was successful.

As shown in FIGS. 9A and 9B, since the hypothetical print medium 100 is not yet turned into a signature, in step S12, the imposition data converter 72 makes a negative judgment (step S12: NO). Thereafter, control returns to step S1, and the group of pages that was updated in FIGS. 9A and 9B is processed again in steps S1 through S11.

Upon completion of processing of the hypothetical print medium 100 shown in FIGS. 9A and 9B in steps S1 through S12, only one fold line 102G is available as a fold line candidate. Therefore, the imposition data converter 72 carries out a third folding trial about the fold line 102G.

If the front side of the hypothetical print medium 100 shown in FIG. 9A is folded about the fold line 102G in order to make a valley fold (step S3), pages 8 and 9 are brought into contact with each other. The two contacting pages have sequential page numbers and are oriented in the same direction (step S4: YES). The total number of contacting pages is two, which is greater than the maximum contacting page number that was previously set to 0 (zero) in step S2 (step S5: YES). Consequently, in step S6, the maximum contacting page number is updated to 2, and the result of the folding trial is temporarily registered as a solution to the folding trial (step S7). If the front side of the hypothetical print medium 100 shown in FIG. 9A is folded about the fold line 102G in order to make a peak fold, then the two contacting pages do not have sequential page numbers (step S4: NO).

At the time that the folding trial conductor 78 has completed its attempt at folding the hypothetical print medium 100 shown in FIGS. 9A and 9B about the fold line 102G (step S8: YES), the folding trial conductor 78 has temporarily registered therein only information concerning the valley fold made on the front side of the hypothetical print medium 100 shown in FIG. 9A about the fold line 102G (step S9: YES). Therefore, the fold information acquirer 80 accumulates the temporarily registered information as fold line information in the fold data accumulator 68c, which represents an optimum solution to the third folding event. In this manner, as shown in FIG. 6, the fold line information is accumulated as a third fold line solution.

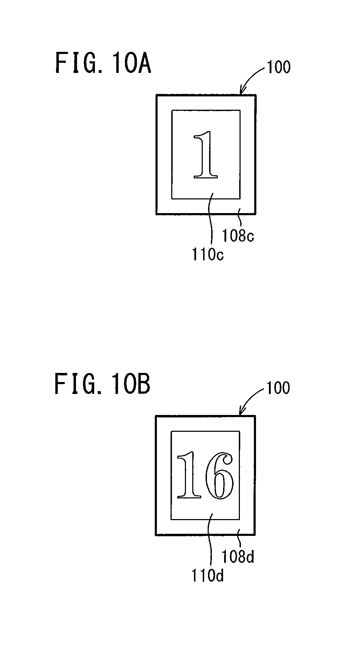

In step S11, based on the third fold line solution, the fold information acquirer 80 updates the group of pages represented by the fold data from the state shown in FIGS. 9A and 9B to the state shown in FIGS. 10A and 10B. As a result, the display data generator 74 generates image data depending on the group of pages shown in FIGS. 10A and 10B, and the display controller 64 displays an image represented by the generated image data on the display unit 28. Similar to the cases of the successful first and second folding events, the display unit 28 displays an image, which shows the hypothetical print medium 100 as updated from the state shown in FIGS. 9A and 9B to the state shown in FIGS. 10A and 10B, thereby indicating to the user that the third folding event was successful.

As shown in FIGS. 10A and 10B, the hypothetical print medium 100 is turned into a signature. In step S12, the imposition data converter 72 makes an affirmative judgment (step S12: YES), and the processing sequence of the imposition data converter 72 is brought to an end.

### [Advantages of the Embodiment]

According to the present embodiment, imposition data can be converted from grid data into fold data. Therefore, the user can perform various processes, including an imposing process, a bookbinding process, etc., without realizing the different types of imposition data, i.e., grid data and fold data. Since imposition data can automatically be converted from grid data into fold data, such data are made compatible with each other.

According to the present embodiment, furthermore, in a case where the folding trial conductor 78 has attempted to fold the hypothetical print medium 100 using the converted fold data, and has successfully folded the hypothetical print medium 100 into a signature, the fold information acquirer 80 acquires the trial result as fold information of the fold data. Therefore, the jobs 36 can efficiently be folded into signatures according to the acquired fold information. In other words, upon the fold data being supplied to the folding machine, the folding machine is made capable of folding the jobs 36 automatically.

According to the present embodiment, therefore, conversion of imposition data from grid data into fold data makes the printing and bookbinding processes including the job folding process more efficient. Even if grid data are generated on conventional JDF-unlinked systems, the grid data can be acquired and converted into fold data to produce desired signatures from jobs.

According to the present embodiment, moreover, in the case that the hypothetical print medium 100 is folded a plurality of times into a signature, each time that a fold is made, the fold lines 102A through 102G are identified about which the hypothetical print medium 100 is folded to thereby set the total number of pages, which are superposed and have sequential page numbers, i.e., the total number of contacting pages, as the maximum contacting page number. The folding directions about the fold lines 102A through 102G also are identified. Consequently, the jobs 36 can reliably and efficiently be turned into signatures based on the identified fold lines and folding directions.

In the event that the folding trial conductor 78 attempts to fold the hypothetical print medium 100 about all of the fold lines 102A through 102G that are available in each folding event, it is possible to reliably identify the fold lines 102A through 102G about which the hypothetical print medium 100 can be folded, to thereby set the total number of contacting pages as the maximum contacting page number, and to reliably identify the folding directions about the fold lines 102A through 102G.

The display unit 28 displays an image representing results of folding trial events, which are carried out on the hypothetical print medium 100 by the folding trial conductor 78. By observing the image displayed on the display unit 28, the user can easily grasp the results of folding trial events that are carried out by the folding trial conductor 78, e.g., whether the folding trial events carried out on the hypothetical print medium 100 have been successful and the hypothetical print medium 100 can be folded into a signature.

### [Modifications of the Embodiment]

The present embodiment is not limited to the details described above. Several changes and modifications may be made to the embodiment as described below.

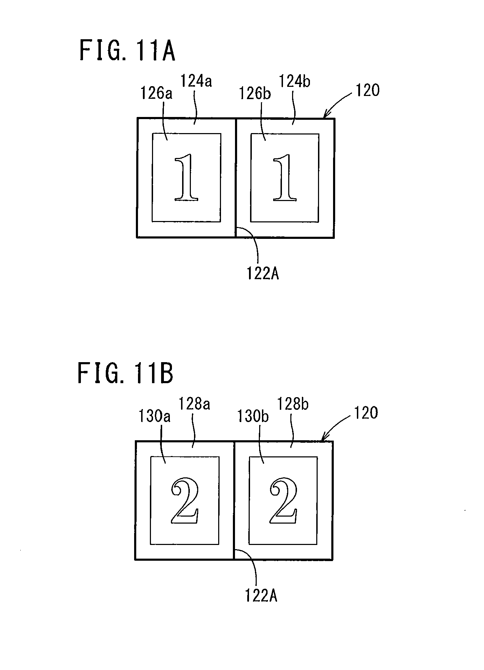

FIGS. 11A and 11B show an example in which imposition data cannot be converted from grid data into fold data. It is assumed that, in an imposition process performed by the user, an error is made to impose the same page number "1" on two pages on the front side of a hypothetical print medium 120 shown in FIG. 11A, and to impose the same page number "2" on two pages on the reverse side of the hypothetical print medium 120 shown in FIG. 11B.

On the front side shown in FIG. 11A, the hypothetical print medium 120, which simulates a job 36, has a boundary serving as a fold line 122A between the two pages, and two areas 124a, 124b representing the pages on both sides of the fold line 122A. The two areas 124a, 124b have respective printing surface areas 126a, 126b.

On the reverse side shown in FIG. 11B, the hypothetical print medium 120 has a boundary that serves as the fold line 122A between the two pages, and two areas 128a, 128b representing the pages on both sides of the fold line 122A. The two areas 128a, 128b have respective printing surface areas 130a, 130b.

In step S3 shown in FIG. 3, the front or reverse side is folded about the fold line 122A in order to make a peak fold or a valley fold. However, the contacting pages do not have sequential page numbers (step S4: NO). The hypothetical print medium 120 has only one fold line 122A.

If the folding trial conductor 78 makes a negative judgment in step S4, then the fold information acquirer 80 determines that fold information representing an optimum solution to the folding trial has not been temporarily registered in the folding trial conductor 78 (step S9: NO). Then, in step S13, the fold information acquirer 80 determines that the grid data cannot be converted into fold data for folding the job 36 into a signature.

Based on the judgment made in step S13, the display data generator 74 generates image data, which represents a failure in converting the grid data into fold data. The display controller 64 displays an image represented by the generated image data on the display unit 28. By observing the displayed image, the user can recognize that the imposition process is erroneous.

More specifically, the display unit 28 displays an image showing that the folding trial performed on the hypothetical print medium 120 by the folding trial conductor 78 has failed. By confirming the image displayed on the display unit 28, the user can easily grasp that the hypothetical print medium 120 cannot be folded into a signature and that the folding trial has failed.

According to the present embodiment, even if trials are conducted to fold the hypothetical print medium 120, if the superposed pages do not have sequential page numbers or are not oriented in the same direction, then it is determined that the hypothetical print medium 120 cannot be folded into a signature. As a consequence, it is possible to prevent jobs 36 from being wasted on account of a failure of the folding process performed by the folding machine.

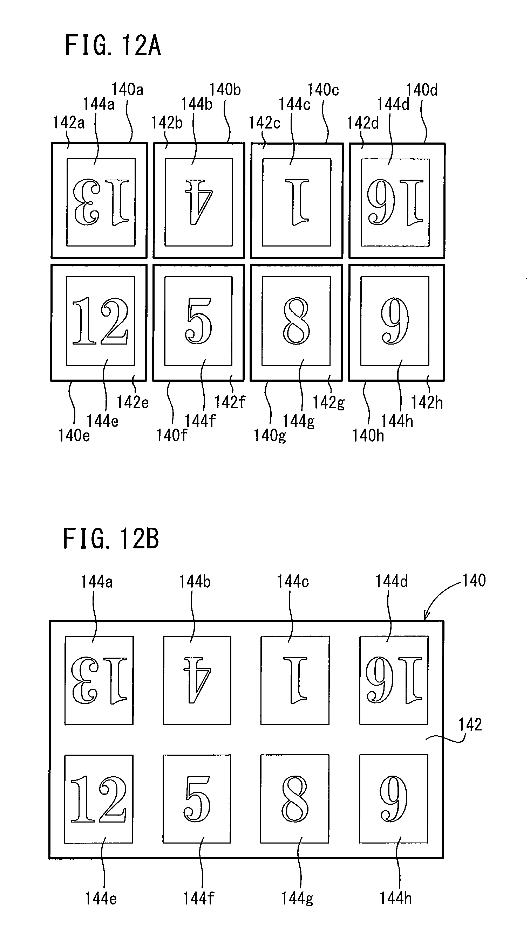

As shown in FIG. 12A, the available grid data represent one page imposed on each of a plurality of hypothetical print mediums 140a through 140h, which have respective areas 142a through 142h allocated thereto including respective printing surface areas 144a through 144h. The process shown in FIG. 3 can be performed in order to convert such grid data into fold data, so that the pages can be imposed on the respective printing surface areas 144a through 144h of a single hypothetical print medium 140, as shown in FIG. 12B.

Stated otherwise, imposition data for imposing a plurality of pages on respective hypothetical print mediums can be converted into imposition data for imposing the pages on a single hypothetical print medium. Therefore, the imposition data can easily be edited in the imposing process. According to the present embodiment, a plurality of pages can be moved in the imposition data, and bleed information can be set comprehensively by the imposition data converter 72.

According to the present embodiment, the folding trial conductor 78 attempts to fold the hypothetical print medium 100 about all of the fold lines 102A through 102G that are available in each folding event. Alternatively, at the time that the fold lines and the folding directions for setting the total number of contacting pages to the maximum contacting page number are identified in each folding event, any remaining trials to fold the hypothetical print medium 100 about the remaining fold lines may be canceled. In this manner, the period of time required to perform the imposing process including the process of converting the imposition data from grid data into fold data can be shortened. Such an alternative is applicable where the job 36 is folded at the center of the sheet.

According to the present embodiment, instead of the above-described alternative process, fold lines, folding directions, and a folding sequence for setting the total number of contacting pages to the maximum contacting page number may be identified comprehensively after the hypothetical print medium 100 has been folded about all of the fold lines 102A through 102G. Such an alternative also is effective to fold the job 36 into a signature reliably and efficiently.

In the above embodiment, the imposition data shown in FIGS. 7A through 12B have been described. However, the present invention is not limited to the imposition data shown in FIGS. 7A through 12B. Various types of grid data, as disclosed in JDF Specification Release 1.3, may be converted into fold data, and trials may be performed to fold jobs based on the fold data. If the fold data are converted in this manner, the same advantages described above can be achieved.

## Claims

1. A data generating apparatus (20) for generating imposition data for imposing a plurality of pages on a print medium (36), comprising:
a fold data converter (76) for converting grid data defining positions of pages, page numbers of the pages, and orientations of the pages, as the imposition data, into fold data defining positions of fold lines (102A through 102G, 122A) about which the print medium (36) is folded into a signature, folding directions, and a folding sequence;
a folding trial conductor (78) for attempting to fold a hypothetical print medium (100, 120, 140), which simulates the print medium (36), based on the fold data, so that pages superposed by folding the print medium (36) have sequential page numbers and are oriented in one direction; and
a fold information acquirer (80) for acquiring a result of folding trial events performed to successfully fold the hypothetical print medium (100, 120, 140) into a signature, as fold information representing the positions of fold lines (102A through 102G, 122A) about which the print medium (36) is folded into a signature, folding directions, and a folding sequence.

2. The data generating apparatus (20) according to claim 1, wherein the folding trial conductor (78) determines that the signature cannot be produced if the pages superposed by folding the print medium (36) do not have sequential page numbers or are not oriented in one direction in a case where the folding trial conductor (78) attempts to fold the hypothetical print medium (100, 120, 140).

3. The data generating apparatus (20) according to claim 1 or 2, wherein:
the hypothetical print medium (100) includes the fold lines (102A through 102G) and can be folded a plurality of times about the fold lines (102A through 102G) into the signature; and
the folding trial conductor (78) identifies positions of fold lines and folding directions for maximizing a total number of superposed pages having sequential page numbers each time that the hypothetical print medium (100) is folded.

4. The data generating apparatus (20) according to claim 3, wherein each time that the hypothetical print medium (100) is folded, the folding trial conductor (78) identifies positions of fold lines and folding directions for maximizing the total number of superposed pages by attempting to fold the hypothetical print medium (100) about all of the fold lines (102A through 102G) that are available, or stops trying to fold the hypothetical print medium (100) about remaining ones of the fold lines (102A through 102G) at the time the positions of fold lines and folding directions for maximizing the total number of superposed pages having sequential page numbers are identified.

5. The data generating apparatus (20) according to claim 1 or 2, wherein:
the hypothetical print medium (100) includes the fold lines (102A through 102G) and can be folded a plurality of times about the fold lines (102A through 102G) into the signature; and
the folding trial conductor (78) attempts to fold the hypothetical print medium (100) about all of the fold lines (102A through 102G) that are available, and thereafter identifies positions of fold lines, folding directions, and a folding sequence for maximizing a total number of superposed pages having sequential page numbers.

6. The data generating apparatus (20) according to any one of claims 1 through 5, further comprising:
a trial result indicator (28) for externally indicating the result of folding trial events performed on the hypothetical print medium (100, 120, 140) by the folding trial conductor (78).

7. The data generating apparatus (20) according to claim 6, wherein the trial result indicator (28) comprises a display unit for displaying the result of folding trial events.

8. A data generating method of generating imposition data for imposing a plurality of pages on a print medium (36), comprising:
a first step of converting grid data defining positions of pages, page numbers of the pages, and orientations of the pages, as the imposition data, into fold data defining positions of fold lines (102A through 102G, 122A) about which the print medium (36) is folded into a signature, folding directions, and a folding sequence;
a second step of attempting to fold a hypothetical print medium (100, 120, 140), which simulates the print medium (36), based on the fold data, so that pages superposed by folding the print medium (36) have sequential page numbers and are oriented in one direction; and
a third step of acquiring a result of folding trial events performed to successfully fold the hypothetical print medium (100, 120, 140) into a signature, as fold information representing the positions of fold lines (102A through 102G, 122A) about which the print medium (36) is folded into a signature, folding directions, and a folding sequence.

9. A recording medium (68) storing therein a program for enabling a computer to function as a unit for generating imposition data for imposing a plurality of pages on a print medium (36), the program enabling the computer to perform functions of:
converting grid data defining positions of pages, page numbers of the pages, and orientations of the pages, as the imposition data, into fold data defining positions of fold lines (102A through 102G, 122A) about which the print medium (36) is folded into a signature, folding directions, and a folding sequence;
attempting to fold a hypothetical print medium (100, 120, 140), which simulates the print medium (36), based on the fold data, so that pages superposed by folding the print medium (36) have sequential page numbers and are oriented in one direction; and
acquiring a result of folding trial events performed to successfully fold the hypothetical print medium (100, 120, 140) into a signature, as fold information representing the positions of fold lines (102A through 102G, 122A) about which the print medium (36) is folded into a signature, folding directions, and a folding sequence.
